# EUROPÄISCHE PATENTSCHRIFT

(11) **EP 2 372 125 B1**
(45) Veröffentlichungstag und Bekanntmachung des Hinweises auf die Patenterteilung: **06.03.2013**
(21) Anmeldenummer: 11004713.1
(22) Anmeldetag: 17.09.2009
(51) Int. Cl.: F02B 37/04, F02B 33/44, F02D 35/00, F02D 41/00, F02B 21/00

(54) **Frischgasversorgungsvorrichtung für eine Verbrennungsmaschine mit Abgasturbolader und Verfahren zu deren Steuerung**
Fresh gas supply device for a combustion engine with exhaust gas turbocharger and method for controlling same
Dispositif d'alimentation en gaz frais pour un moteur à combustion interne doté d'une turbosoufflante de gaz d'échappement et son procédé de commande

(30) Priorität: 17.09.2008 DE 102008047802
(43) Veröffentlichungstag der Anmeldung: 05.10.2011
(62) Teilanmeldung aus: 09778584.4
(73) Patentinhaber: KNORR-BREMSE Systeme für Nutzfahrzeuge GmbH, 80809 München (DE)
(72) Erfinder: Rebhan, Stephan, 81373 München (DE); Ulrich, Niklas, 80796 München (DE); Sipos, András, 1094 Budapest (HU); Lelkes, Márk, 1119 Budapest (HU); Dohany, Tamás, 7630 Pécs (HU); Lorant, Gabor, 1192 Budapest (HU)
(74) Vertreter: Schönmann, Kurt

(56) Entgegenhaltungen:
- WO-A1-2005/064134
- DE-A1-102004 047 975
- DE-A1-102006 008 785

## Beschreibung

Die Erfindung betrifft eine Frischgasversorgungsvorrichtung für eine Verbrennungsmaschine mit Abgasturbolader nach dem Oberbegriff des Anspruchs und ein Verfahren zum Regeln eines Auslassdrucks einer solchen Frischgasversorgungsvorrichtung.

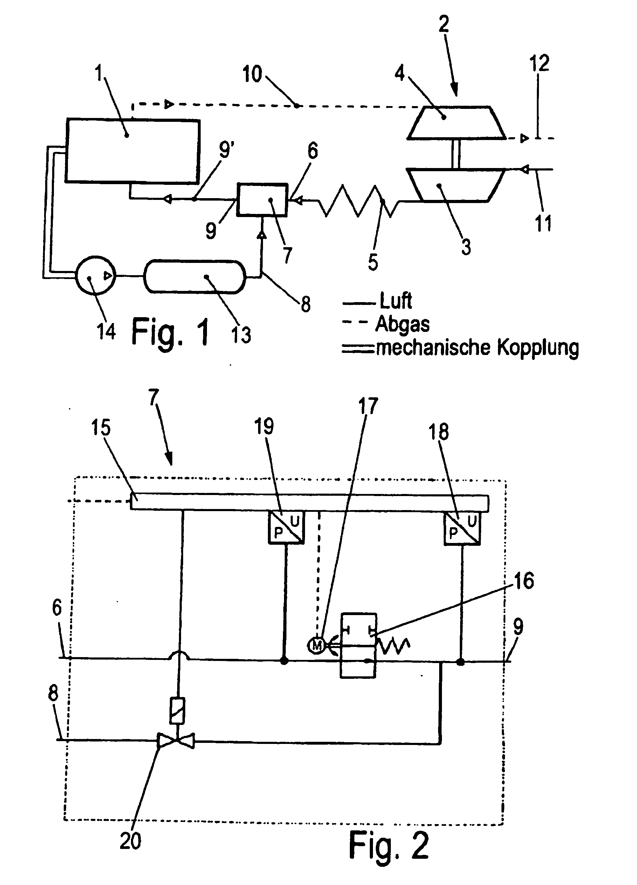

Verbrennungsmaschinen, wie zum Beispiel Dieselmotoren, sind oft mit Abgasturboladern ausgerüstet. Hierzu zeigt Fig. 1 eine schematische Darstellung einer Verbrennungsmaschine 1, deren Abgasleitung 10 mit einem Abgasturbolader 2 gekoppelt ist. Der Abgasturbolader besitzt eine von Abgas angetriebene Turbine 2, die mit einem Verdichter 3 gekoppelt ist. Der Verdichter 3 verdichtet Ansaugluft aus einem Ansauglufteinlass 11 zur Erhöhung eines Ansaugdrucks in einer Saugleitung 9' für die Verbrennungsmaschine 1, wodurch zum Beispiel ein Beschleunigungsverhalten des Fahrzeugs mit der Verbrennungsmaschine 1 und eine Reduzierung des Energieverbrauchs erreicht werden.

Der Abgasturbolader 1 kann jedoch nicht in jedem Betriebszustand der Verbrennungsmaschine 1 ausreichend Luft fördern und somit einen genügenden Ansaugdruck erzeugen. Beispielsweise weisen Kolbenmaschinen wie Dieselmotoren mit Abgasturbolader 2 zum Beispiel einen Betriebszustand beim Beschleunigen auf, der als "Turboloch" bezeichnet wird. Hierbei reagiert die Verbrennungsmaschine 1 beim Gasgeben mit einer Drehzahlerhöhung erst nach einer bestimmten Verzögerungszeit, in welcher keine Abgasenergie, d.h. auch kein genügender Abgasdruck, zum Antrieb des Abgasturboladers 2 und somit keine komprimierte Ansaugluft mit entsprechendem Ansaugdruck zur Verfügung steht. Zur Überbrückung dieses "Turbolochs" sind Lösungsvorschläge gemacht worden, wobei Druckluft, zum Beispiel aus einem von einem Luftverdichter 14 gespeisten Behälter 13, gesteuert in die Saugleitung 9' der Verbrennungsmaschine eingeleitet 1 wird, um bei erhöhtem Ansaugluftbedarf der Verbrennungsmaschine 1 diesen zu decken. Dieses erfolgt mittels einer Frischgasversorgungsvorrichtung 7, welche zwischen dem Verdichter 3 des Turboladers bzw. einem in Strömungsrichtung nachgeschalteten Ladeluftkühler 5 und der Saugleitung 9' angeordnet ist.

Eine solche Frischgasversorgungsvorrichtung 7 ist in Fig. 2 schematisch dargestellt. Die Frischgasversorgungsvorrichtung 7 ist mit einem Ladelufteinlass 6 mit dem Ladeluftkühler 5 und mit einem Auslass 9 mit der Saugleitung 9' verbunden. Zwischen dem Ladelufteinlass 6 und dem Auslass 9 befindet sich ein Klappenelement 16, das von einem Verstellmotor 17 zum Verschluss und zur Öffnung der Verbindung von Ladelufteinlass 6 zum Auslass 9 verstellbar ist. Weiterhin ist ein Drucklufteinlass 8 mit dem Auslass 9 und über eine Mengenregeleinrichtung 20 mit dem Behälter 13 verbunden. Eine Steuereinrichtung 15 dient zur Steuerung der Mengenregeleinrichtung 20 und des Verstellmotors 17. Sie ist hier auch mit Drucksensoren 18 und 19 verbunden, von denen ein erster Drucksensor 18 einen Druck des Auslasses 9 (Auslassdruck) und ein zweiter Drucksensor 19 einen Druck des Ladelufteinlasses (Einlassdruck) abtastet und eine Drehmomentanforderung bei einem "Kick-Down" feststellt. In diesem Fall führt die Mengenregeleinrichtung 20 Druckluft durch Öffnung der Verbindung vom Drucklufteinlass 8 zum Auslass 9 zu. Zuvor wird das gesteuerte Klappenelement 16 geschlossen, so dass die Druckluft nicht über den Ladelufteinlass 6 in den Verdichter 3 des Abgasturboladers 2 entgegen der Ansaugrichtung, sondern über den Auslass 9 gerichtet in die Saugleitung 9' strömt. Bei Beenden der Druckluftzufuhr wird dieses Klappenelement 16 wieder geöffnet und die Mengenregeleinrichtung 20 geschlossen. Zu diesem Zeitpunkt ist der Einlassdruck durch den Verdichter 3 des Abgasturboladers 2 wieder ausreichend.

Die Offenlegungsschrift DE 10 2006 785 A1 beschreibt dazu ein Beispiel zur Illustration.

Der Auslassdruck ist durch die Zufuhr von Druckluft so eingestellt, dass keine Rauchbildung aufgrund eines zu angereicherten Kraftstoffluftgemisches erfolgen kann. Dadurch kann ein magereres Kraftstoffluftgemisch als erforderlich erzeugt werden, insbesondere zu Beginn der Druckluftzufuhr. Folglich wird mehr Luft verbraucht als nötig. Das kann zu erhöhter Leistung des Luftverdichters 14 und zusätzlicher NOx-Bildung führen.

Es ist daher die Aufgabe der vorliegenden Erfindung, eine verbesserte Frischgasversorgungsvorrichtung und ein Verfahren zum Regeln eines Auslassdrucks einer solchen Frischgasversorgungsvorrichtung bereitzustellen, wobei die obigen Nachteile behoben beziehungsweise bedeutend verringert und weitere Vorteile geschaffen sind.

Die Aufgabe wird durch eine Frischgasversorgungsvorrichtung mit den Merkmalen des Anspruchs 1 gelöst. Die Aufgabe wird ferner durch ein Verfahren mit den Merkmalen des Anspruchs 8 gelöst.

Die Frischgasversorgungsvorrichtung für eine Verbrennungsmaschine mit Abgasturbolader weist Folgendes auf: einen Ladelufteinlass zum Einlass von Ladeluft aus dem Abgasturbolader; einen Drucklufteinlass zum Einlass von Druckluft; einen Auslass, der über ein Klappenelement mit dem Ladelufteinlass und über eine Mengenregeleinrichtung, welche eine geschlossene Stellung und beliebig geöffnete Stellungen aufweist, mit dem Drucklufteinlass verbindbar ist, wobei die Mengenregeleinrichtung geschlossen ist, wenn die Verstelleinrichtung, vorzugsweise das Klappenelement, teilweise geöffnet oder voll geöffnet ist; und eine Steuereinrichtung zur Steuerung der Verstelleinrichtung, vorzugsweise des Klappenelementes, und der Mengenregeleinrichtung in Abhängigkeit von Betriebszuständen der Verbrennungsmaschine, wobei die Mengenregeleinrichtung zumindest zwei Ventile zur Öffnung und zum Verschluss des Drucklufteinlasses und zur Einstellung eines Auslassdrucks im Auslass aufweist, und wobei die zumindest zwei Ventile jeweils über ein Steuerventil von der Steuereinrichtung separat steuerbar sind.

Mittels zumindest zweier Ventile ist es vorteilhaft möglich, eine mehrstufige Einstellung des Auslassdrucks vorzunehmen, wobei die Ventile separat über Steuerventile steuerbar sind. Dabei können die Ventile gleiche oder unterschiedliche Strömungsquerschnitte aufweisen, wodurch eine flexible Anpassung an eine Einstellung des erforderlichen Auslassdruck ermöglicht wird. Hierbei können sowohl Einschaltzeit als auch Anzahl der eingeschalteten Ventile variiert werden.

In einer weiteren Ausführung sind die zumindest zwei Ventile und/ oder das Klappenelement mittels elektrischer, mechanischer und/oder anderer Mittel zwischen einer geschlossenen Stellung und einer geöffneten Stellung stufenlos einstellbar. Hierbei können die Ventile ebenfalls gleiche oder unterschiedlich große Strömungsquerschnitte aufweisen, wodurch eine besonders hohe Variabilität zur Einstellung bzw. Regelung des Auslassdrucks ermöglicht wird. Besonders vorteilhaft ist es in dem Fall, in welchem sowohl die beiden Ventile als auch das Klappenelement jeweils stufenlos einstellbar sind, da somit ein großer Anpassungsbereich an unterschiedliche Betriebszustände geschaffen ist.

Ein Verfahren zum Regeln eines Auslassdrucks in einem Auslass einer oben beschriebenen Frischgasversorgungsvorrichtung mit zumindest zwei Ventilen weist folgende Verfahrensschritte auf:
(S1) Ermitteln von Betriebsparametern eines Betriebszustands der Verbrennungsmaschine;
(S2) Unterbrechen der Verbindung des Auslasses zum Ladelufteinlass durch Schließen der Verstelleinrichtung (Verschlusseinrichtung), vorzugsweise des Klappenelementes, wenn ein ermittelter Betriebsparameter oder mehrere eine Beschleunigung der Verbrennungsmaschine erfordern; und
(S3) Öffnen der Verbindung des Auslasses zum Drucklufteinlass durch vollständiges Öffnen der zumindest zwei Ventile in einer Druckaufbauphase und Regeln Auslassdrucks durch Vergleichen dieses Drucks mit einem Solldruck während einer Druckregelphase durch separates Öffnen und Schließen der zumindest zwei Ventile oder durch Verstellen zumindest eines der zumindest zwei Ventile zwischen einer geöffneten und geschlossenen Stellung; und
(S4) Schließen der Verbindung des Auslasses zum Drucklufteinlass durch Schließen der zumindest zwei Ventile und Öffnen der Verbindung des Auslasses zum Ladelufteinlass durch Öffnen der Verstelleinrichtung, vorzugsweise der des Klappenelementes, wenn der Einlassdruck einen definierten und parametrierbaren Wert erreicht hat. Dieser Wert kann zum Beispiel dem Auslassdruck entsprechen, oder vorher festlegbar sein.

Die Druckluftzufuhr kann hierbei bei jeder Beschleunigungs- bzw. Drehmomenterhöhungsanforderung (auch "Kick-Down") erfolgen. Denkbar ist es aber auch, sie nur bei vorab definierten Anforderungen einzusetzen, so z.B. nur bei bestimmten Gangwechseln.

Hierbei kann der Solldruck aus den ermittelten bzw. allen verfügbaren Betriebsparametern durch die Steuereinrichtung anhand von geeigneten Algorithmen und/oder gespeicherten Tabellenwerten ermittelt werden, wodurch zusätzliche Drucksensoren an der Frischgasversorgungsvorrichtung nicht erforderlich sind. Die Betriebsparameter können derartige Werte bereits direkt oder indirekt enthalten. Natürlich sind auch zusätzliche Drucksensoren möglich.

Das separate Öffnen und Schließen der zumindest zwei Ventile oder Verstellen zumindest eines der zumindest zwei Ventile zwischen einer geöffneten und geschlossenen Stellung kann gemäß einer Look-Up-Tabelle durch die Steuereinrichtung erfolgen. Zum Beispiel kann hierzu eine besondere Ein-/Ausschaltstrategie bzw. Einstellstrategie vorher festgelegt sein, die ebenfalls in Tabellenwerten gespeichert ist. Die Tabellenwerte können in der Steuereinrichtung oder/und extern, beispielsweise in der Motorsteuerung gespeichert sein.

Anstelle eines Klappenelementes kann auch eine andere Art von Verstelleinrichtung, so z.B. ein Schieberelement eingesetzt werden.

Die Erfindung wird nun anhand von Ausführungsbeispielen mit Bezug auf die beigefügten Zeichnungen näher erläutert. Hierbei zeigt:
- Fig. 1: eine schematische Darstellung einer Verbrennungsmaschine mit einem Abgasturbolader und einer Frischgasversorgungsvorrichtung;
- Fig. 2: ein schematisches Blockschaltbild einer herkömmlichen Frischgasversorgungsvorrichtung;
- Fig. 3: ein schematisches Blockschaltbild eines ersten Ausführungsbeispiels einer erfindungsgemäßen Frischgasversorgungsvorrichtung;
- Fig. 4: eine grafische Darstellung eines Auslassdrucks;
- Fig. 5: eine perspektivische Illustration in Explosionsdarstellung eines Ventilmoduls nach dem ersten Ausführungsbeispiel der Fig. 3;
- Fig. 6: eine grafische Darstellung eines Strömungsquerschnitts eines Proportionalventils in Abhängigkeit von einer Winkelstellung einer Ventilscheibe;
- Fig. 7: eine schematische Querschnittsdarstellung des Ventilmoduls längs Linie Z-Z nach Fig. 5;
- Fig. 8: ein schematisches Blockschaltbild eines zweiten Ausführungsbeispiels der erfindungsgemäßen Frischgasversorgungsvorrichtung; und
- Fig. 9: eine grafische Darstellung eines Auslassdrucks und dazugehöriger Strömungsquerschnitte eingeschalteter Ventile.

Gleiche Bauelemente bzw. Funktionseinheiten mit gleicher Funktion sind mit gleichen Bezugszeichen in den Figuren gekennzeichnet.

Fig. 1 und Fig. 2 sind bereits eingangs beschrieben worden und werden hier nicht weiter erläutert.

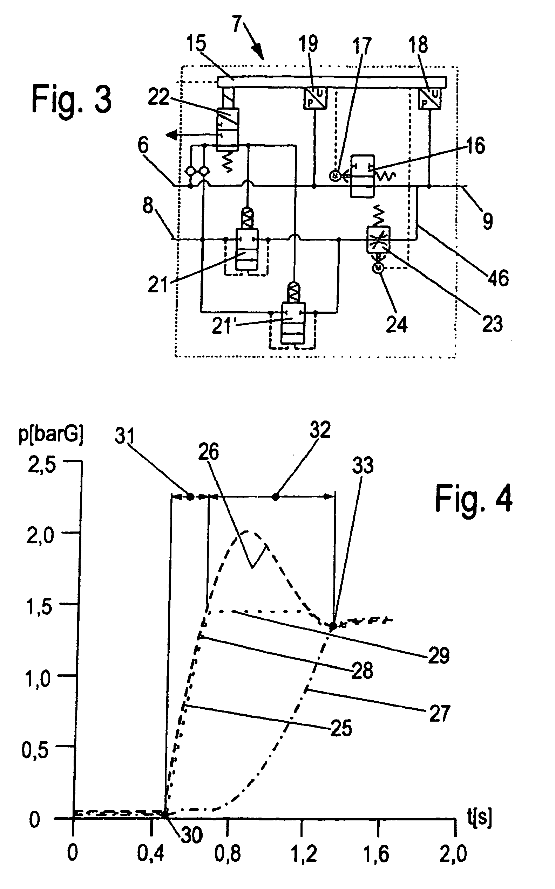

In Fig. 3 ist ein schematisches Blockschaltbild eines ersten Ausführungsbeispiels einer erfindungsgemäßen Frischgasversorgungsvorrichtung 7 illustriert, wobei im Gegensatz zu der herkömmlichen Frischgasversorgungsvorrichtung 7 nach Fig. 2 die Mengenregelvorrichtung 20 hier zwei Ventile 21, 21' mit einem zugehörigen Steuerventil 22 und einem in Strömungsrichtung nachgeschalteten Proportionalventil 23, das von einem Schrittmotor 24 verstellbar ist, umfasst. Hierbei sind die zwei Ventile 21, 21' parallel geschaltet. Die Ventile 21, 21' sind vorzugsweise als Versorgungsventile ausgebildet und werden durch das Steuerventil 22, welches von der Steuereinrichtung 15 elektrisch steuerbar ist, gemeinsam ein- und ausgeschaltet. Bei nicht erforderlicher Druckluftzufuhr aus dem Drucklufteinlass 8 verschließen sie ihn, wobei das Proportionalventil 23 in diesem Zustand nicht mit dem Druck des Druckeinlasses 8 beaufschlagt ist und entsprechend ausgebildet sein kann. Es wird weiter unten noch näher erläutert.

Zur Funktion wird nun auf Fig. 4 Bezug genommen. Fig. 4 ist eine grafische Darstellung eines ersten Auslassdrucks 25 im Auslass 9 der Frischgasversorgungsvorrichtung 7, aufgetragen über einer Achse mit der Zeit t. Bei einer Drehmomentanforderung, die durch Überwachung von Druckwerten des Ladelufteinlasses 6 (Einlassdruck 27) und des Auslassdrucks 25 im Auslass 9 durch die an der Frischgasversorgungsvorrichtung 7 oder außerhalb von ihr angeordneten Drucksensoren 18, 19 oder auch durch andere, nicht gezeigte Messeinrichtungen über die Steuereinrichtung 15 ermittelt wird, steuert diese zunächst den Verstellmotor 17 des Klappenelementes 16 zum Verschluss der Verbindung vom Ladelufteinlass 6 zum Auslass 9 an. Dabei wird das Proportionalventil 23 über den Schrittmotor 14 geöffnet. Dann wird das Steuerventil 22 eingeschaltet, wodurch die Ventile 21, 21' öffnen und so über das geöffnete Proportionalventil 23 den Drucklufteinlass 6 mit dem Auslass 9 verbinden. Eine Rückwirkung der nun in diesen einströmenden Druckluft auf den Ladelufteinlass 6 wird durch das geschlossene Klappenelement 16 verhindert. Dabei steigt der Auslassdruck 25 im Auslass 9 ausgehend von einem Einblasbeginn 31 während einer Druckaufbauphase 31 schnell auf einen Überdruck 26 (hier: ca. 2 bar) an, der durch den ersten Drucksensor 18 an die Steuereinrichtung 15 geliefert und mit einem vorher einstellbaren Solldruck 29 (in diesem Beispiel ca. 1,5 bar) verglichen wird. Dadurch wird über die Steuereinrichtung 15 das Proportionalventil 23 auf einen kleineren Strömungsquerschnitt verstellt, so dass in einer sich anschließenden Druckregelphase 32 mittels dieser Regelschleife der Auslassdruck 25 auf einen Solldruck 29 eingeregelt wird. Ohne diese Regelung würde der Auslassdruck 25 den Überdruck 26 vollständig einnehmen und wieder abfallen, wodurch eine Abmagerung des Kraftstoffluftgemisches und eine erhöhte Förderleistung des Luftverdichters 14 resultieren würden.

Zu Beginn der Drehmomentanforderung ist der vom Abgasturbolader 2 gelieferte Ladeluftdruck, welcher als Einlassdruck 27 in diesem Beispiel vom zweiten Drucksensor 19 abgetastet wird, noch sehr gering ("Turboloch"). Er steigt dann parabelförmig an, da der Abgasturbolader 2 beschleunigt und mehr Ladeluft erzeugt.

Die Druckregelphase 32, in welcher der Auslassdruck 25 auf den Solldruck 29 geregelt wird, der quasi einen konstanten Wert bildet, verläuft bis zum Einblasende 33, wenn der Einlassdruck 27 und der Auslassdruck 25 im Wesentlichen übereinstimmen. Oder wenn der Einlassdruck 27 einen definierten und parametrierbaren Wert erreicht hat. Dieser Wert kann zum Beispiel dem Auslassdruck entsprechen, oder vorher festlegbar sein.

Mit dem Bezugszeichen 28 ist ein Verlauf eines Sollanstiegs des Auslassdrucks 25 bezeichnet.

Bei Einblasende 33 werden die Ventile 21, 21' geschlossen, ebenfalls das Proportionalventil 23, wobei das Klappenelement 16 wieder geöffnet wird.

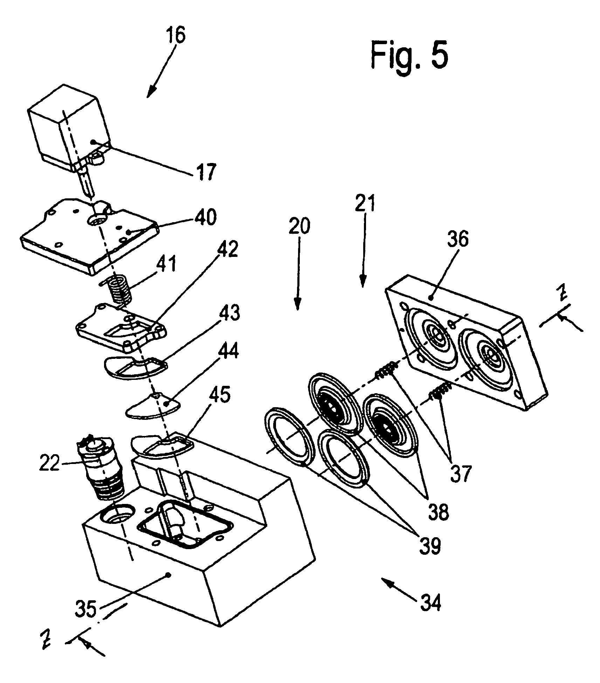

Die Ventile 21, 21', das Proportionalventil 23 mit Schrittmotor 24 und das Steuerventil 22 sind in bevorzugter Ausführung in einem Ventilmodul 34, das in Fig. 5 in einer perspektivischen Explosionsdarstellung illustriert ist, angeordnet. Das Ventilmodul 34 besitzt ein Ventilgehäuse 35 zur Aufnahme des Steuerventils 22, des Proportionalventils 23 und der Ventile 21, 21'. Die Ventile 21, 21' sind in diesem Fall als flache Membranventile mit Diaphragmen 38, Stützringen 39 und Diaphragmenfedern 37 ausgeführt, welche in dem Ventilgehäuse 35 angeordnet und durch einen Membrandeckel 36 verschlossen sind. Es können natürlich auch andere Ausgestaltungen benutzt werden.

Das Proportionalventil 23 weist einen variablen Strömungsquerschnitt auf. Der Strömungsquerschnitt (Ventilscheibenposition) wird dynamisch in Funktion des Luftbedarfs der Verbrennungsmaschine 1 (mit dem Ziel eines konstanten Kraftstoffluftgemisches) eingestellt. Das Proportionalventil 23 wird von dem Schrittmotor 24 verstellt, indem dieser eine mit seiner Welle verbundene Ventilscheibe 44 direkt verschwenkt. Wenn das Einblasende 33 erreicht ist, wird das Proportionalventil 23 vollständig geschlossen, wobei das Ventilmodul 34 damit von der Saugleitung 9', d.h. vom Auslass 9 getrennt ist. Die hauptsächliche Dichtfunktion des Proportionalventils 23 besteht darin zu verhindern, dass Inhalte der Saugleitung 9' in das Ventilmodul 34 eindringen. Weiterhin ist eine Sicherheitsfeder 41 mit der Welle des Schrittmotors 23 bzw. mit der Ventilscheibe 44 gekoppelt, wodurch die Ventilscheibe 44, zum Beispiel bei einem Stromausfall, in die geschlossene Stellung zurückgeschwenkt wird. Die Ventilscheibe 44 ist zwischen einer oberen Dichtung 43 und einer unteren Dichtung 45 verschwenkbar angeordnet, wobei die obere Dichtung 43 von einer Dichtungsstützplatte 42 mit einer Öffnung gehalten ist. Die Dichtungen 43, 45 und die Dichtungsstützplatte 42 befinden sich mit der Ventilscheibe 44 in diesem Beispiel innerhalb einer korrespondierenden Ausnehmung des Ventilgehäuses 35, welche mit einem Ventildeckel 40 verschlossen ist. Der Schrittmotor 24 ist auf dem Ventildeckel 40 von außen angebracht, wobei sich die Motorwelle durch den Ventildeckel 40 hindurch in die Ausnehmung erstreckt. Zur Erzielung guten Trag-, Gleit- und Dichteigenschaften sind die Dichtungen 43, 45 zum Beispiel mit PTFE beschichtet.

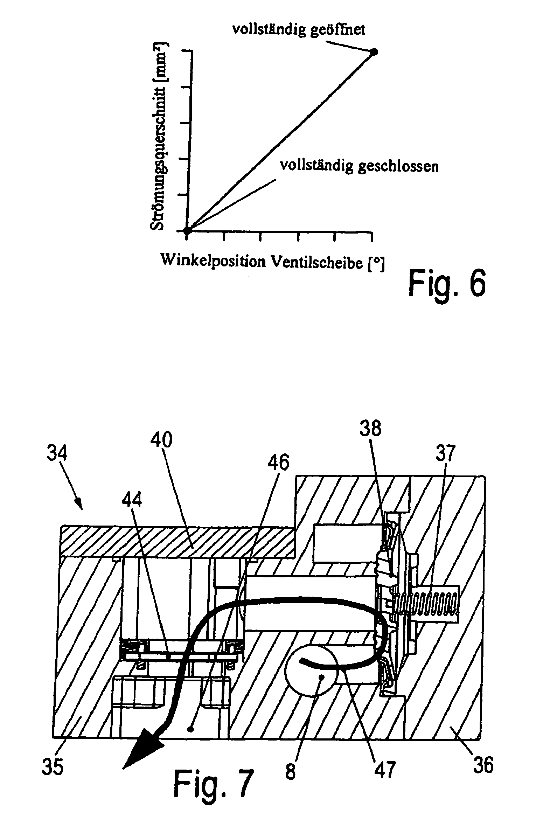

Fig. 6 zeigt eine grafische Darstellung eines Strömungsquerschnitts des Proportionalventils 23 in Abhängigkeit von einer Winkelstellung der Ventilscheibe 44. Die Verstellung des Proportionalventils 23 und somit des Strömungsquerschnitts ist aus einer geschlossenen Stellung stufenlos zu einer geöffneten Stellung und zurück proportional zum Verstellwinkel der Ventilscheibe 44. Andere Zusammenhänge sind ebenfalls möglich.

Das Steuerventil 22 ist mit seiner Längsachse parallel neben dem Proportionalventil 23 in dem Ventilgehäuse 35 angeordnet, wobei die Ventile 21, 21' mit ihren Längachse im Wesentlichen rechtwinklig von einer Seite in das Ventilgehäuse 35 eingebracht sind. Andere Anordnungen sind möglich. Die Ventile 22 und 21, 21' und 23 sind durch Kanäle innerhalb des Ventilgehäuses 35 miteinander entsprechend verbunden. Die Unterseite des Ventilgehäuses 35 (siehe Fig. 7) in dieser Darstellung ist an die Frischgasversorgungseinrichtung 7 anbringbar.

Hierzu illustriert Fig. 7 eine schematische Querschnittsdarstellung des Ventilmoduls 34 längs Linie Z-Z nach Fig. 5. Ein Strömungspfad 47 der Druckluft verläuft vom

Drucklufteinlass 8 durch die geöffneten Diaphragmen 38 der Ventile 21, 21' durch einen Verbindungskanal durch die geöffnete Ventilscheibe 44 des Proportionalventils 23 in eine Auslassverbindung 46, die in nicht dargestellter Weise mit dem Auslass 9 der Frischgasversorgungsvorrichtung 7 kommuniziert. Die Diaphragmenfedern 37 üben eine Kraft auf die Diaphragmen 38 derart aus, dass diese bei Nichtbetätigung den Durchgang vom Drucklufteinlass 8 zum Proportionalventil 23 verschließen.

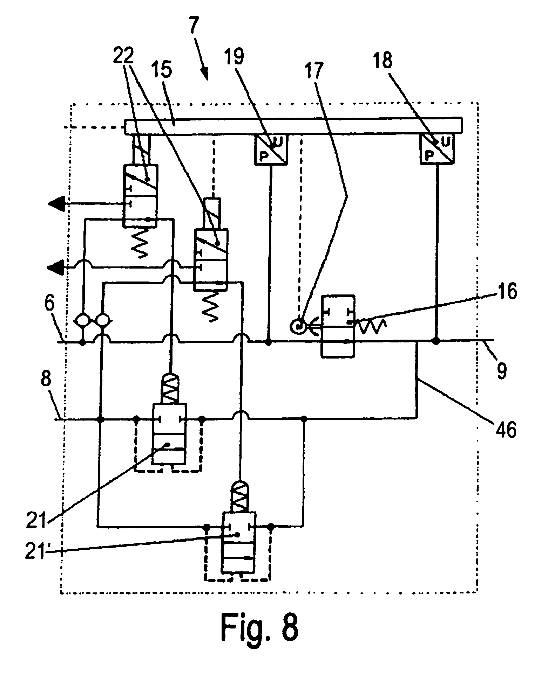

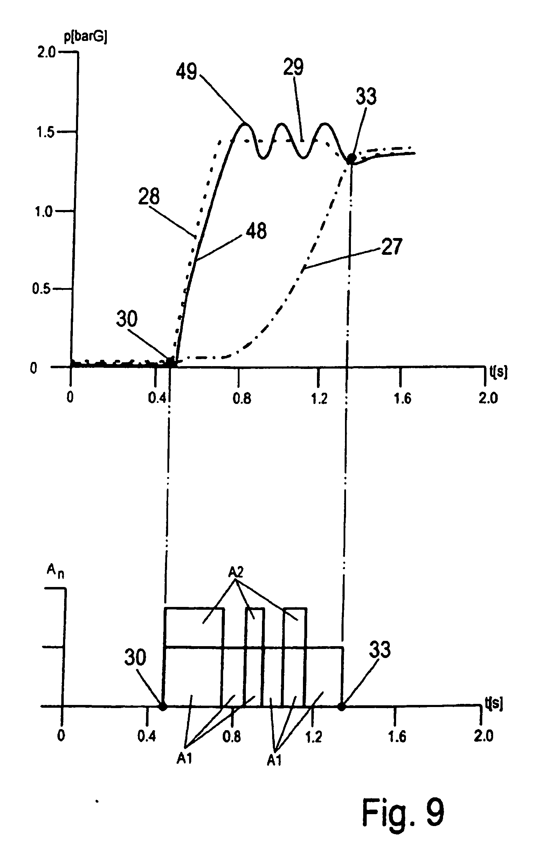

Fig. 8 zeigt ein schematisches Blockschaltbild eines zweiten Ausführungsbeispiels der erfindungsgemäßen Frischgasversorgungsvorrichtung 7. Die bereits in Fig. 3 beschriebenen und hier vorhandenen Funktionselemente werden hier nicht erneut beschrieben. Hierbei sind zumindest zwei Ventile 21, 21', vorzugsweise zwei Hochdruckventile, parallel zueinander zwischen dem Drucklufteinlass 8 und dem Auslass 9 angeordnet. Sie sind jeweils von einem Steuerventil 22 durch die Steuereinrichtung 15 separat voneinander steuerbar. In der hier gezeigten zweiten Ausführung besitzen die Ventile 21, 21' unterschiedliche Strömungsquerschnitte Aₙ, nämlich A1 und A2, wie Fig. 9 unten schematisch zeigt.

Fig. 9 zeigt eine grafische Darstellung eines zweiten Auslassdrucks 48 und dazugehöriger Strömungsquerschnitte An eingeschalteter Ventile 21, 21'. Im oberen Teil der Fig. 9 ist ein zweiter Auslassdruck 48 im Auslass 9 über der Zeit t aufgetragen, wobei im unteren Teil der Fig. 9 zugehörige Strömungsquerschnitte An eingeschalteter Ventile 21, 22 illustriert sind. Der Einlassdruck 27 ist bereits unter Fig. 4 erläutert worden. Das Bezugszeichen 28 gibt den Sollanstieg eines idealen Druckanstiegs im Auslass 9 an. Der Solldruck 29 ist der Sollwert (hier im Bereich von 1,5 bar), welcher als Vergleichswert zu einem Istwert des zweiten Auslassdrucks 48 (gemessen im Auslass 9) zur Ermittlung einer Stellgröße für den Strömungsquerschnitt A der Ventile 21, 21' verwendet wird, um somit den zweiten Auslassdruck 48 auf den Sollwert 29 einzuregeln. Dabei können im Verlauf der Druckregelphase 33 (siehe auch Fig. 4) nach erfolgtem Druckanstieg Druckschwingungen 49 um den Sollwert 29 auftreten. Ein Überdruck 26 wie in Fig. 4 dargestellt und die damit verbundenen Nachteile können jedoch vermieden werden.

Zur Erzielung des gewünschten Strömungsquerschnitts werden die zumindest zwei Ventile 21, 21' separat von einander einzeln oder gleichzeitig ein- bzw. ausgeschaltet. Die zumindest zwei Ventile 21, 21' weisen hier unterschiedliche Strömungsquerschnitte A1, A2 auf, wobei A1 größer A2 ist. Bei Einblasbeginn 30 sind beide Strömungsquerschnitte A1, A2 geöffnet, dann wird A2 intermittierend geschlossen, wodurch sich die Druckschwingung 49, die hier übertrieben dargestellt ist, ergibt. Beide Strömungsquerschnitte A1, A2 werden dann beim Einblasende 33 geschlossen. Die Strömungsquerschnitte A1, A2 können auch gleich groß sein. Auch die Einschalt- bzw. Ausschaltzeiten können variiert werden. Bei einer größeren Anzahl von Ventilen 21, 21' mit mehreren unterschiedlichen Strömungsquerschnitten Aₙ, unterschiedlichen Ein- und Ausschaltzeiten sind größere Variationsmöglichkeiten und feinere Regelungsabstufungen sowie geringere Druckschwingungen 49 des zweiten Auslassdrucks 48 möglich.

Der gesamte Strömungsquerschnitt wird festgelegt, um den maximalen Luftverbrauch der Verbrennungsmaschine, normalerweise die Waste-Gate-Betätigung, zu unterstützen.

Die Anordnung der zumindest zwei Ventile 21, 21' mit zugehörigen Steuerventilen 22 in diesem zweiten Ausführungsbeispiel kann ebenfalls in einem Ventilmodul 34 ähnlich dem ersten Ausführungsbeispiel erfolgen.

Die Ein-/Ausschaltfolge dieser mehrstufigen Ventile 21, 21' erfolgt mittels einer bestimmten Strategie, bei welcher unterschiedliche Auslassdruckcharakterisika in große Variation möglich sind. Derartige Strategien können zum Beispiel aus einer Steuer- bzw. Regelstrategie abgeleitet werden, die alle elektrischen/mechanischen, im System eines zu der Verbrennungsmaschine 1 gehörenden Fahrzeugs verfügbaren Signale/Parameter/Programme benutzt. Hierbei können Look-Up-Tabellen und weiterer gespeicherte Werte/Tabellen u. dgl. zur Anwendung kommen. Derartige Tabellen können bei Einstell- bzw. Hochlaufphasen der Verbrennungsmaschine 1 bzw. deren Steuerung usw. erstellt, abgeglichen, geändert, ergänzt werden.

Die Erfindung ist nicht auf die oben beschriebenen Ausführungsbeispiele beschränkt. Sie ist im Rahmen der beigefügten Ansprüche modifizierbar.

Im ersten Ausführungsbeispiel ist es auch möglich, nur ein Ventil 21 oder mehrere zu verwenden.

So kann zum Beispiel zumindest eines der zumindest zwei Ventile 21, 21' vorzugsweise Versorgungsventile des zweiten Ausführungsbeispiels nach Fig. 8 mittels einer mechanischen, elektrischen oder anderen oder Kombination dieser zwischen einer geschlossenen Stellung und einer geöffneten Stellung, vollständig variabel oder auch stufig verstellbar sein, derart, dass ein Strömungsquerschnitt ebenfalls vollständig variabel oder auch stufig verstellbar ist, wodurch eine noch vielseitigere Regelung und Anpassung des Auslassdrucks 48 möglich ist.

Es ist auch denkbar, dass ein Ventil 21, 21' mehrstufig mit gleich großen oder unterschiedlichen Strömungsquerschnitten ausgebildet ist.

Es ist ferner möglich, dass der Einlassdruck 27 und der Auslassdruck 25, 48 oder nur einer von diesen beiden rechnerisch anhand von Betriebsparametern ermittelbar ist. Zum Beispiel können die Betriebsparameter mittels eines geeigneten Algorithmus und/oder gespeicherter Tabellenwert durch die Steuereinrichtung 15 errechnet werden.

Außerdem ist es möglich, dass auch das Klappenelement 16 mittels elektrischer, mechanischer und/oder anderer Mittel zwischen einer geschlossenen Stellung und einer geöffneten Stellung stufenlos einstellbar ist. Hierbei sind mehrere Fälle möglich, nämlich, dass entweder die zwei Ventile 21,21' und das Klappenelement 16 oder nur das Klappenelement 16 oder nur die zwei Ventile 21, 21' stufenlos einstellbar sind. In dem Fall einer stufenlosen Einstellbarkeit sowohl der zwei Ventile 21, 21' als auch des Klappenelementes 16 ist eine sehr große Variationsmöglichkeit und Anpassungsfähigkeit an ein weites Spektrum von Betriebszuständen möglich.

### Bezugszeichenliste

- 1: Verbrennungsmaschine
- 2: Abgasturbolader
- 3: Verdichter
- 4: Abgasturbine
- 5: Ladeluftkühler
- 6: Ladelufteinlass
- 7: Frischgasversorgungsvorrichtung
- 8: Drucklufteinlass
- 9: Auslass
- 9': Saugleitung
- 10: Abgasleitung
- 11: Ansauglufteinlass
- 12: Abgasauslass
- 13: Behälter
- 14: Luftverdichter
- 15: Steuereinrichtung
- 16: Klappenelement
- 17: Verstellmotor
- 18: Erster Drucksensor
- 19: Zweiter Drucksensor
- 20: Mengenregeleinrichtung
- 21, 21: Ventil
- 22: Steuerventil
- 23: Proportionalventil
- 24: Schrittmotor
- 25: Erster Auslassdruck
- 26: Überdruck
- 27: Einlassdruck
- 28: Sollanstieg
- 29: Solldruck
- 30: Einblasbeginn
- 31: Druckaufbauphase
- 32: Druckregelphase
- 33: Einblasende
- 34: Ventilmodul
- 35: Ventilgehäuse
- 36: Membrandeckel
- 37: Membranfeder
- 38: Membran
- 39: Stützring
- 40: Ventildeckel
- 41: Sicherheitsfeder
- 42: Dichtungsstützplatte
- 43: Obere Dichtung
- 44: Ventilscheibe
- 45: Untere Dichtung
- 46: Auslassverbindung
- 47: Strömungspfad
- 48: Zweiter Auslassdruck
- 49: Druckschwingung
- An: Strömungsquerschnitt
- p: Druck
- t: Zeit

## Patentansprüche

1. Frischgasversorgungsvorrichtung (7) für eine Verbrennungsmaschine (1) mit Abgasturbolader (2), aufweisend:
a) einen Ladelufteinlass (6) zum Einlass von Ladeluft aus dem Abgasturbolader (2);
b) einen Drucklufteinlass (8) zum Einlass von Druckluft;
c) einen Auslass (9), der über eine Verstelleinrichtung, vorzugsweise ein Klappenelement (16), mit dem Ladelufteinlass (6) und über eine Mengenregeleinrichtung (20), welche eine geschlossene Stellung und beliebig geöffnete Stellungen aufweist, mit dem Drucklufteinlass (8) verbindbar ist, wobei die Mengenregeleinrichtung (20) geschlossen ist, wenn die Verstelleinrichtung, vorzugsweise das Klappenelement (16), teilweise geöffnet oder voll geöffnet ist; und
d) eine Steuereinrichtung (15) zur Steuerung des Klappenelementes (16) und der Mengenregeleinrichtung (20) in Abhängigkeit von Betriebszuständen der Verbrennungsmaschine (1),
**dadurch gekennzeichnet, dass**
e) die Mengenregeleinrichtung (20) zumindest zwei Ventile (21, 21`) zur Öffnung und zum Verschluss des Drucklufteinlasses (8) und zur Einstellung des Auslassdrucks (25, 48) im Auslass (9) aufweist, und wobei die zumindest zwei Ventile (21, 21') jeweils über ein Steuerventil (22) von der Steuereinrichtung (15) separat steuerbar sind.

2. Frischgasversorgungsvorrichtung (7) nach Anspruch 1, **dadurch gekennzeichnet, dass** die zumindest zwei Ventile (21, 21') gleich große Strömungsquerschnitte (Aₙ) aufweisen.

3. Frischgasversorgungsvorrichtung (7) nach Anspruch 1, **dadurch gekennzeichnet, dass** die zumindest zwei Ventile (21, 21') unterschiedlich große Strömungsquerschnitte (Aₙ) aufweisen.

4. Frischgasversorgungsvorrichtung (7) nach einem der Ansprüche 1 bis 3, **dadurch gekennzeichnet, dass** die zumindest zwei Ventile (21, 21') und/ oder das Klappenelement (16) mittels elektrischer, mechanischer und/oder anderer Mittel zwischen einer geschlossenen Stellung und einer geöffneten Stellung stufenlos einstellbar sind.

5. Frischgasversorgungsvorrichtung (7) nach einem der Ansprüche 1 bis 4, **dadurch gekennzeichnet, dass** die Frischgasversorgungsvorrichtung (7) zumindest einen Drucksensor (18) zur Abtastung eines Auslassdrucks (25, 48) im Auslass (9) und zumindest einen Drucksensor (19) zur Abtastung eines Einlassdrucks (27) im Ladelufteinlass (6) aufweist.

6. Frischgasversorgungsvorrichtung (7) nach einem der Ansprüche 1 bis 4, **dadurch gekennzeichnet, dass** ein Auslassdruck (25, 48) und ein Einlassdruck (27) im Ladelufteinlass (6) mittels außerhalb der Frischgasversorgungsvorrichtung angeordneten Messeinrichtungen abtastbar sind.

7. Frischgasversorgungsvorrichtung (7) nach einem der Ansprüche 1 bis 4, **dadurch gekennzeichnet, dass** ein Auslassdruck (25, 48) und ein Einlassdruck (27) im Ladelufteinlass (6) anhand von Betriebsparametern mittels geeigneter Algorithmen und/oder gespeicherter Tabellenwerten berechenbar sind.

8. Verfahren zum Regeln eines Auslassdrucks (25, 48) in einem Auslass (9) einer Frischgasversorgungsvorrichtung (7) nach einem der Ansprüche 1 bis 7, wobei das Verfahren folgende Verfahrensschritte aufweist:
(S1) Ermitteln von Betriebsparametern eines Betriebszustands der Verbrennungsmaschine (1);
(S2) Unterbrechen der Verbindung des Auslasses (9) zum Ladelufteinlass (6) durch Schließen der Verstelleinrichtung, vorzugsweise des Klappenelementes (16), wenn ein ermittelter Betriebsparameter oder mehrere eine Beschleunigung der Verbrennungsmaschine (1) erfordern; und
(S3) Öffnen der Verbindung des Auslasses (9) zum Drucklufteinlass (8) durch vollständiges Öffnen der zumindest zwei Ventile (21, 21') in einer Druckaufbauphase (31) und Regeln Auslassdrucks (25, 48) durch Vergleichen dieses Drucks mit einem Solldruck (29) während einer Druckregelphase (32) durch separates Öffnen und Schließen der zumindest zwei Ventile (21, 21') oder durch Verstellen zumindest eines der zumindest zwei Ventile (21, 21`) zwischen einer geöffneten und geschlossenen Stellung; und
(S4) Schließen der Verbindung des Auslasses (9) zum Drucklufteinlass (8) durch Schließen der zumindest zwei Ventile (21,21') und Öffnen der Verbindung des Auslasses (9) zum Ladelufteinlass (6) durch Öffnen der Verstelleinrichtung, vorzugsweise des Klappenelementes (16), wenn der Einlassdruck (27) einen definierten und parametrierbaren Wert erreicht hat.

9. Verfahren nach Anspruch 8, **dadurch gekennzeichnet, dass** der Solldruck (29) aus den ermittelten Betriebsparametern durch die Steuereinrichtung anhand von geeigneten Algorithmen und/oder gespeicherten Tabellenwerten ermittelt wird.

10. Verfahren nach Anspruch 8, **dadurch gekennzeichnet, dass** der Solldruck (29) durch Ermitteln eines Einlassdrucks (27) im Ladelufteinlass (6) und des Auslassdrucks (25, 28) im Auslass (9) der Frischgasversorgungsvorrichtung, sowie aus den ermittelten Betriebsparametern durch die Steuereinrichtung anhand von geeigneten Algorithmen und/oder gespeicherten Tabellenwerten ermittelt wird.

11. Verfahren nach einem der Ansprüche 8 bis 10, **dadurch gekennzeichnet, dass** das separate Öffnen und Schließen der zumindest zwei Ventile (21,21') oder Verstellen zumindest eines der zumindest zwei Ventile (21, 21') zwischen einer geöffneten und geschlossenen Stellung gemäß einer Look-Up-Tabelle durch die Steuereinrichtung (15) erfolgt.

## Claims

1. Fresh-gas supply device (7) for an internal combustion engine (1) having a turbocharger (2), comprising:
a) a charge-air inlet (6) for the admission of charge air from the turbocharger (2);
b) a compressed-air inlet (8) for the admission of compressed air;
c) an outlet (9) which can be connected via an adjusting device, preferably via a flap element (16), to the charge-air inlet (6) and via a flow-regulating device (20), which has a closed position and preferably any desired open positions, to the compressed-air inlet (8), with the flow-regulating device (20) being closed when the adjusting device, preferably the flap element (16) is partially open or fully open; and
d) a control device (15) for controlling the flap element (16), and the flow-regulating device (20) as a function of operating states of the internal combustion engine (1),
**characterised in that**
e) the flow-regulating device (20) has at least two valves (21, 21') for opening and for closing off the compressed-air inlet (8) and for adjusting the outlet pressure (25, 48) in the outlet (9), each of the at least two valves (21, 21') being individually controllable by the control device (15) via a control valve (22).

2. Fresh-gas supply device (7) according to claim 1, **characterised in that** the at least two valves (21, 21') have flow cross-sections (Aₙ) of identical size.

3. Fresh-gas supply device (7) according to claim 1, **characterised in that** the at least two valves (21, 21') have flow cross-sections (Aₙ) of different sizes.

4. Fresh-gas supply device (7) according to any of claims 1 to 3, **characterised in that** the at least two valves (21, 21') and/or the flap element (16) can be adjusted in a continuously variable fashion between a closed position and an open position by electrical, mechanical and/or other means.

5. Fresh-gas supply device (7) according to any of claims 1 to 4, **characterised in that** the fresh-gas supply device (7) has at least one pressure sensor (18) for measuring an outlet pressure (25, 48) in the outlet (9) and at least one pressure sensor (19) for measuring an inlet pressure (27) in the charge-air inlet (6).

6. Fresh-gas supply device (7) according to any of claims 1 to 4, **characterised in that** an outlet pressure (25, 48) and an inlet pressure (27) in the charge-air inlet (6) can be measured by means of measuring devices arranged outside the fresh-gas supply device.

7. Fresh-gas supply device (7) according to any of claims 1 to 4, **characterised in that** an outlet pressure (25, 48) and an inlet pressure (27) in the charge-air inlet (6) can be calculated on the basis of operating parameters by means of suitable algorithms and/or stored table values.

8. Method for regulating an outlet pressure (25, 48) in an outlet (9) of a fresh-gas supply device (7) according to any of Claims 1 to 7, with the method comprising the following method steps:
(S1) determining operating parameters of an operating state of the internal combustion engine (1);
(S2) blocking the connection of the outlet (9) to the charge-air inlet (6) by closing the adjusting device, preferably the flap element (16), if one determined operating parameter or a plurality thereof require an increased acceleration of the internal combustion engine (1);
(S3) opening the connection of the outlet (9) to the compressed-air inlet (8) by completely opening the at least two valves (21, 21') during a pressure build-up phase (31) and by regulating the outlet pressure (25, 48) by comparing this pressure to a nominal pressure (20) during a pressure-regulating phase (32) by individually opening and closing the at least two valves (21, 21') or by adjusting at least one of the at least two valves (21, 21') between an open and a closed position; and
(S4) closing the connection of the outlet (9) to the compressed-air inlet (8) by closing the at least two valves (21, 21') and opening the connection of the outlet (9) to the charge-air inlet (6) by opening the adjusting device, preferably the flap element (16), if the inlet pressure (27) has reached a defined and parametrisable value.

9. Method according to claim 8, **characterised in that** the nominal pressure (29) is determined by the control device from the determined operating parameters on the basis of suitable algorithms and/or stored table values.

10. Method according to claim 8, **characterised in that** the nominal pressure (29) is determined by the control device by determining an inlet pressure (27) in the charge-air inlet (6) and the outlet pressure (25, 28) in the outlet (9) of the fresh-gas supply device, and from the determined operating parameters, on the basis of suitable algorithms and/or stored table values.

11. Method according to any of claims 8 to 10, **characterised in that** the at least two valves (21, 21') are separately opened and closed, or at least one of the at least two valves (21, 21') is adjusted between an open and closed position by the control device (15) according to a look-up table.

## Revendications

1. Dispositif (7) d'alimentation en gaz frais pour un moteur (1) à combustion interne ayant un turbocompresseur (2) à gaz d'échappement, comportant :
a) une admission (6) d'air de charge, pour l'admission d'air de charge provenant du turbocompresseur (2) à gaz d'échappement ;
b) une admission (8) d'air comprimé, pour l'admission d'air comprimé ;
c) une sortie (9), qui peut, par un dispositif de réglage, de préférence un élément (16) à volet, communiquer avec l'admission (6) d'air de charge et, par un dispositif (20) de régulation de débit, qui a une position fermée et une position ouverte à volonté, communiquer avec l'admission (8) d'air comprimé, le dispositif (20) de régulation de débit étant fermé lorsque le dispositif de réglage, de préférence l'élément (16) à clapet, est ouvert en partie ou est ouvert complètement ; et
d) un dispositif (15) de commande de l'élément (16) à volet et du dispositif (20) de régulation de débit en fonction des états de fonctionnement du moteur (1) à combustion interne,
**caractérisé en ce que**
e) le dispositif (20) de régulation de débit a au moins deux vannes (21, 21') d'ouverture et de fermeture de l'admission (8) d'air comprimé et de réglage de la pression (25, 48) de sortie dans la sortie (9) et dans lequel les au moins deux vannes (21, 21') peuvent être commandées séparément respectivement par une vanne pilote (22) du dispositif (15) de commande.

2. Dispositif (7) d'alimentation en gaz frais suivant la revendication 1, **caractérisé en ce que** les au moins deux vannes (21, 21') ont des sections (Aₙ) transversales d'écoulement de mêmes dimensions.

3. Dispositif (7) d'alimentation en gaz frais suivant la revendication 1, **caractérisé en ce que** les au moins deux vannes (21, 21') ont des sections (Aₙ) transversales d'écoulement de dimensions différentes.

4. Dispositif (7) d'alimentation en gaz frais suivant l'une des revendications 1 à 3, **caractérisé en ce que** les au moins deux vannes (21, 21') et/ou l'élément (16) à volet peuvent être réglées à l'aide d'un moyen électrique, mécanique et/ou autre entre une position fermée et une position ouverte.

5. Dispositif (7) d'alimentation en gaz frais suivant l'une des revendications 1 à 4, **caractérisé en ce que** le dispositif (7) d'alimentation en gaz frais a au moins un capteur (18) de pression, pour détecter une pression (25, 48) de sortie à la sortie (9), et au moins un capteur (19) de pression, pour détecter une pression (27) d'admission à l'admission (6) d'air de charge.

6. Dispositif (7) d'alimentation en gaz frais suivant l'une des revendications 1 à 4, **caractérisé en ce qu'**une pression (25, 48) de sortie et une pression (27) d'admission dans l'admission (6) d'air de charge peuvent être détectées à l'aide de dispositifs de mesure montés à l'extérieur du dispositif d'alimentation en gaz frais.

7. Dispositif (7) d'alimentation en gaz frais suivant l'une des revendications 1 à 4, **caractérisé en ce qu'**une pression (25, 48) de sortie et une pression (27) d'admission à l'entrée (6) d'air de charge peuvent être calculées au moyen de paramètres de fonctionnement à l'aide d'algorithmes appropriés et/ou de valeurs de table mises en mémoire.

8. Procédé de régulation d'une pression (25, 48) de sortie dans une sortie (9) d'un dispositif (7) d'alimentation en gaz frais suivant l'une des revendications 1 à 7, dans lequel le procédé a les stades de procédé suivants :
(S1) on détermine des paramètres de fonctionnement d'un état de fonctionnement du moteur (1) à combustion interne ;
(S2) on interrompt la communication allant de la sortie (9) à l'admission (6) d'air de charge en fermant le dispositif de réglage, de préférence l'élément (16) à volet, lorsqu'un paramètre de fonctionnement déterminé ou plusieurs d'entre eux exigent une accélération du moteur (1) à combustion interne ;
(S3) on ouvre la communication allant de la sortie (9) à l'admission (8) d'air comprimé, en ouvrant complètement les au moins deux vannes (21, 21') dans une phase (31) d'établissement de la pression, et on règle la pression (25, 48) de sortie, en comparant cette pression à une pression (29) de consigne pendant une phase (32) de régulation de la pression, en ouvrant et en fermant séparément les au moins deux vannes (21, 21') et en réglant au moins l'une des au moins deux vannes (21, 21') entre une position ouverte et une position fermée ; et
(S4) on ferme la communication allant de la sortie (9) à l'admission (8) d'air comprimé, en fermant les au moins deux vannes (21, 21') et en ouvrant la communication allant de la sortie (9) à l'admission (6) d'air de charge, en ouvrant le dispositif de réglage, de préférence l'élément (16) à volet, lorsque la pression (27) d'admission a atteint une valeur définie et paramétrable.

9. Procédé suivant la revendication 8, **caractérisé en ce que** l'on détermine, par le dispositif de commande, au moyen d'algorithmes appropriés et/ou de valeurs de table mises en mémoire, la pression (29) de consigne à partir des paramètres de fonctionnement déterminés.

10. Procédé suivant la revendication 8, **caractérisé en ce que** l'on détermine, par le dispositif de commande, au moyen d'algorithmes appropriés et/ou de valeurs de table mises en mémoire, la pression (29) de consigne en déterminant une pression (27) d'entrée à l'entrée (6) d'air de charge et la pression (25, 28) de sortie à la sortie (9) du dispositif d'alimentation en gaz frais, ainsi qu'à partir des paramètres de fonctionnement déterminés.

11. Procédé suivant l'une des revendications 8 à 10, **caractérisé en ce que** l'on effectue par le dispositif (15) de commande suivant une table de consultation l'ouverture et la fermeture séparées des au moins deux vannes (21, 21') ou le réglage d'au moins l'une des au moins deux vannes (21, 21') entre une position ouverte et une position fermée.
